# FASCICULE DE BREVET EUROPEEN

(11) **EP 3 265 692 B1**
(45) Date de publication et mention de la délivrance du brevet: **04.09.2019**
(21) Numéro de dépôt: 16706651.3
(22) Date de dépôt: 26.02.2016
(51) Int. Cl.: F16D 13/46, F16F 15/131, F16F 15/134

(54) **ENSEMBLE DE TRANSMISSION POUR VÉHICULE AUTOMOBILE**
GETRIEBEANORDNUNG FÜR EIN KRAFTFAHRZEUG
TRANSMISSION ASSEMBLY FOR A MOTOR VEHICLE

(30) Priorité: 02.03.2015 FR 1551722
(43) Date de publication de la demande: 10.01.2018
(73) Titulaire: Valeo Embrayages, 80009 Amiens Cedex 2 (FR)
(72) Inventeur: COUTURIER, Benoit, 80009 Amiens (FR)
(74) Mandataire: Cardon, Nicolas
(86) Numéro de dépôt international: PCT/EP2016/054161
(87) Numéro de publication internationale: WO 2016/139154

(56) Documents cités:
- DE-C2- 4 091 456
- US-A- 4 220 233

## Description

### Domaine technique

L'invention se rapporte au domaine des transmissions pour véhicule automobile.

Elle se rapporte notamment à un ensemble de transmission destiné à être disposé entre un moteur thermique et une boîte de vitesses d'un véhicule automobile.

### Arrière-plan technologique

Dans l'état de la technique, afin de permettre un accouplement entre un arbre menant, tel qu'un vilebrequin d'un moteur thermique, et un arbre mené, tel qu'un arbre d'entrée d'une boîte de vitesses, il est connu des ensembles de transmission, associant un volant moteur et un dispositif d'embrayage. Le volant moteur est destiné à être fixé à l'arbre menant. Le dispositif d'embrayage comporte un couvercle d'embrayage fixé au volant moteur, un disque de friction destiné à être solidarisé en rotation à l'arbre mené, un plateau de pression solidaire en rotation du couvercle d'embrayage et un diaphragme annulaire monté articulé sur le couvercle d'embrayage afin de solliciter axialement le plateau de pression entre une position embrayée dans laquelle le disque de friction est pincé entre le plateau de pression et une zone du volant moteur formant plateau de réaction et une position débrayée dans laquelle le disque de friction est libéré. Ainsi, en position embrayée, le couple moteur est transmis de l'arbre menant vers l'arbre mené.

Par ailleurs, un moteur à explosion présente des acyclismes du fait des explosions se succédant dans les cylindres du moteur. Afin de filtrer les vibrations engendrées par les acyclismes du moteur thermique, il est connu d'intégrer aux ensembles de transmission précités des amortisseurs de torsion à organes élastiques. A défaut de tels amortisseurs, des vibrations pénétrant dans la boîte de vitesses y provoqueraient en fonctionnement des chocs, bruits ou nuisances sonores particulièrement indésirables, voire des ruptures.

Par exemple, les documents US4220233 et DE4091456 décrivent un tel ensemble d'embrayage comprenant un double volant amortisseur associé avec un dispositif d'embrayage dont le disque de friction est équipé d'un amortisseur de torsion. Compte-tenu de l'encombrement axial important des ensembles associant double volant amortisseur et disque de friction équipé d'un amortisseur de torsion, leur usage est limité aux applications disposant d'un espace suffisant.

### Résumé

Une idée à la base de l'invention est de proposer un ensemble de transmission, destiné à accoupler un arbre menant à un arbre mené, qui soit amélioré.

Selon un mode de réalisation, l'invention fournit un ensemble de transmission pour véhicule automobile, destiné à assurer l'accouplement entre un arbre menant et un arbre mené, ledit ensemble comportant :
- un double volant amortisseur comportant :
   - un volant d'inertie primaire, destiné à être fixé à l'arbre menant, et un volant d'inertie secondaire ; les volants d'inertie primaire et secondaire étant montés mobiles en rotation l'un par rapport à l'autre autour d'un axe de rotation X; et
   - des premiers moyens élastiques d'amortissement accouplant élastiquement le volant d'inertie primaire et le volant d'inertie secondaire et étant aptes à amortir les vibrations :
- pour un couple transmis selon un sens direct, du volant d'inertie primaire vers le volant d'inertie secondaire prenant une valeur inférieure à un premier couple d'arrêt direct ; et
- pour un couple transmis selon un sens rétro du volant d'inertie secondaire vers le volant d'inertie primaire prenant une valeur inférieure à un premier couple d'arrêt rétro ;
   et
- un dispositif d'embrayage comportant :
   - un disque de friction comportant des garnitures de friction ; et
   - un mécanisme d'embrayage fixé sur le volant d'inertie secondaire du double volant amortisseur, ledit mécanisme d'embrayage étant apte à prendre une position embrayée dans laquelle il presse les garnitures de friction contre le volant d'inertie secondaire du double volant amortisseur et une position débrayée,
le disque de friction comportant en outre un amortisseur de torsion comportant :
- un élément d'entrée solidaire en rotation des garnitures de friction et un élément de sortie destiné à être accouplé en rotation à l'arbre mené, les éléments d'entrée et de sortie étant montés mobiles en rotation l'un par rapport à l'autre autour de l'axe de rotation X;
- des seconds moyens élastiques d'amortissement accouplant élastiquement l'élément d'entrée et l'élément de sortie et étant aptes à amortir les vibrations :
   - pour un couple transmis selon un sens direct, de l'élément d'entrée vers l'élément de sortie prenant une valeur inférieure à un second couple d'arrêt direct, et
   - pour un couple transmis selon un sens rétro de l'élément de sortie vers l'élément d'entrée prenant une valeur inférieure à un second couple d'arrêt rétro ;
ledit ensemble étant remarquable en ce que le second couple d'arrêt direct est compris entre 26 % et 84% du premier couple d'arrêt direct.

Ainsi, un tel ensemble de transmission est susceptible de filtrer efficacement les vibrations au moyen à la fois du double volant amortisseur et de l'amortisseur de torsion du disque de friction dans la zone de bas régime pour laquelle le moteur ne délivre pas son couple maximal.

En outre, en sous-dimensionnant le couple d'arrêt des moyens d'amortissement de l'amortisseur de torsion du disque de friction par rapport à ceux du double volant amortisseur, notamment en dessous du couple maximal moteur, il est possible d'utiliser des moyens d'amortissement moins encombrants et/ou moins lourds et/ou moins chers ce qui permet de diminuer l'encombrement axial du disque de friction et/ou son inertie et/ou son coût, tout en conservant de bonnes performances dans leur plage de filtrage.

Un tel ensemble de transmission s'avère ainsi particulièrement approprié pour des motorisations à deux ou trois cylindres pour lesquelles de forts acyclismes sont générés à bas régime et pour lesquelles l'encombrement axial disponible entre le moteur et la boîte de vitesses pour loger l'ensemble de transmission est parfois limité.

Un tel ensemble de transmission peut comprendre l'une ou plusieurs des caractéristiques suivantes.
- Selon un mode de réalisation, le second couple d'arrêt direct est supérieur à 33 %du premier couple d'arrêt direct, de préférence supérieur à 40 % du premier couple d'arrêt direct.
- Le second couple d'arrêt direct est inférieur à 75 % du premier couple d'arrêt direct et de préférence inférieur à 66 %du premier couple d'arrêt direct.
- Par exemple, le second couple d'arrêt direct est compris entre 160Nm et 300Nm et de préférence entre 190Nm et 220Nm.
- Selon un mode de réalisation, le second couple d'arrêt rétro est inférieur au premier couple d'arrêt rétro.
- Selon un mode de réalisation, le second couple d'arrêt rétro est compris entre 0 et 60 Nm.
- Selon un mode de réalisation, le second couple d'arrêt rétro est nul.
- Selon un mode de réalisation, les seconds moyens élastiques d'amortissement présentent une raideur constante sur toute la plage de rotation relative des éléments d'entrée et de sortie.
- Selon un mode de réalisation, les seconds moyens élastiques d'amortissement présentent une première raideur pour une transmission de couple selon le sens direct et une seconde raideur différente de la première raideur pour une transmission de couple selon le sens rétro.
- Selon un mode de réalisation, la première raideur est supérieure à la seconde raideur afin d'améliorer les performances de filtrage en rétro.
- Selon un mode de réalisation, les seconds moyens élastiques présentent une raideur non linéaire, par exemple croissante dans le sens direct, obtenue par exemple avec des moyens élastique à lame ou à élastomère.
- Selon un mode de réalisation, les seconds moyens d'amortissement sont pré-comprimés dans une position relative de repos des éléments d'entrée et de sortie. La position relative de repos est la position relative prise par les éléments d'entrée et de sortie lorsqu'aucun couple n'est transmis.
- Selon un mode de réalisation, le second couple d'arrêt direct est inférieur à un couple maximal susceptible d'être délivré par un moteur à combustion entraînant l'arbre menant.
- Selon un mode de réalisation, le second couple d'arrêt direct est supérieur à 40 % du couple maximal susceptible d'être délivré par le moteur à combustion, de préférence supérieur à 50 %, par exemple supérieur à 60 % dudit couple maximal.
- Selon un mode de réalisation, le second couple d'arrêt direct est inférieur à 100 % du couple maximal susceptible d'être délivré par le moteur à combustion, de préférence inférieur à 90 %, par exemple supérieur à 80 % dudit couple maximal.
- Selon un mode de réalisation, le second couple d'arrêt rétro est inférieur au couple maximal susceptible d'être délivré par le moteur à combustion.
- Selon un mode de réalisation, le premier couple d'arrêt direct est supérieur ou égal à 120 %, et de préférence compris entre 120 et 150 %, par exemple compris entre 120 et 130 %, d'un couple maximal susceptible d'être délivré par un moteur à combustion entraînant l'arbre menant.
- Selon un mode de réalisation, le premier couple d'arrêt rétro est supérieur ou égal à 120 %, et de préférence compris entre 120 et 150 %, par exemple entre 120 et 130 % d'un couple maximal susceptible d'être délivré par un moteur à combustion entraînant l'arbre menant.
- Les volants d'inertie primaire et secondaire sont mobiles en rotation l'un par rapport à l'autre autour de l'axe de rotation X entre une première et une seconde positions de débattement maximum correspondant respectivement à une rotation relative maximale des volants d'inertie primaire et secondaire selon deux sens de rotation relative opposés, les premiers couples d'arrêt direct et rétro correspondant respectivement à des seuils de couple pour lesquels les volants d'inertie primaire et secondaire atteignent leur première et leur seconde positions de débattement maximum.
- Les éléments d'entrée et de sortie sont montés mobiles en rotation l'un par rapport à l'autre autour de l'axe de rotation X entre une première et une seconde positions de débattement maximum correspondant respectivement à une rotation relative maximale des éléments d'entrée et de sortie selon deux sens de rotation relative opposés; les seconds couples d'arrêt direct et rétro correspondant respectivement à des seuils de couple pour lesquels les éléments d'entrée et de sortie atteignent leur première et leur seconde positions de débattement maximum.
- Dans un autre mode de réalisation, les positions de débattement maximum des volants d'inertie primaire et secondaire et/ou des éléments d'entrée et des sortie sont obtenues par des moyens de butée agissant entre le volant primaire et le volant secondaire et/ou entre l'élément d'entrée et l'élément de sortie.
- Les seconds moyens élastiques d'amortissement sont agencés de telle sorte que pour un couple transmis dans le sens direct prenant une valeur égale au second couple d'arrêt direct lesdits seconds moyens élastiques d'amortissement emmagasinent une énergie potentielle supérieure à 70 % de leur énergie potentielle maximum, dans le sens direct, de préférence entre 80à 100 %.
- Les seconds moyens élastiques d'amortissement sont agencés de telle sorte que pour un couple transmis dans le sens rétro prenant une valeur égale au second couple d'arrêt rétro lesdits seconds moyens élastiques d'amortissement emmagasinent une énergie potentielle supérieure à 10 % de leur énergie potentielle maximum dans le sens rétro, de préférence au-delà de 20%.
- Les premiers moyens élastiques d'amortissement sont également agencés de telle sorte que pour un couple transmis dans le sens direct prenant une valeur égale au premier couple d'arrêt direct lesdits seconds moyens élastiques d'amortissement emmagasinent une énergie potentielle supérieure à 80 % de leur énergie potentielle maximum, dans le sens direct, de préférence supérieure à 90 % et notamment de l'ordre de 95 à 100 % et que pour un couple transmis dans le sens rétro prenant une valeur égale au second couple d'arrêt rétro lesdits seconds moyens élastiques d'amortissement emmagasinent une énergie potentielle supérieure à 10 % de leur énergie potentielle maximum dans le sens rétro, de préférence au-delà de 20 %.
- Selon un mode de réalisation, le disque de friction comporte des moyens de frottement (par exemple entre 5 N.m et 50 N.m), mis en oeuvre de façon connue, de façon à éviter un phénomène de résonnance dans un régime supérieur à la plage de filtrage de l'amortisseur du disque de friction (par exemple entre 2000 et 2500 tours/min).
- Selon un mode de réalisation, l'invention fournit un véhicule automobile équipé d'un ensemble de transmission précité et d'un moteur à combustion apte à délivrer un couple moteur maximum, ledit moteur à combustion comprenant un vilebrequin constituant l'arbre menant, le volant d'inertie primaire du double volant amortisseur étant fixé sur ledit vilebrequin.

Ces caractéristiques de l'ensemble de transmission contribuent notamment à permettre une réduction de la raideur des moyens d'amortissement du disque de friction, à permettre une diminution de la taille et du poids des ressorts formant les moyens d'amortissement équipant le disque de friction et/ou à permettre un réduction des coûts de fabrication en autorisant une utilisation de fils de ressorts de moindre qualité pour la production desdits moyens d'amortissement.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

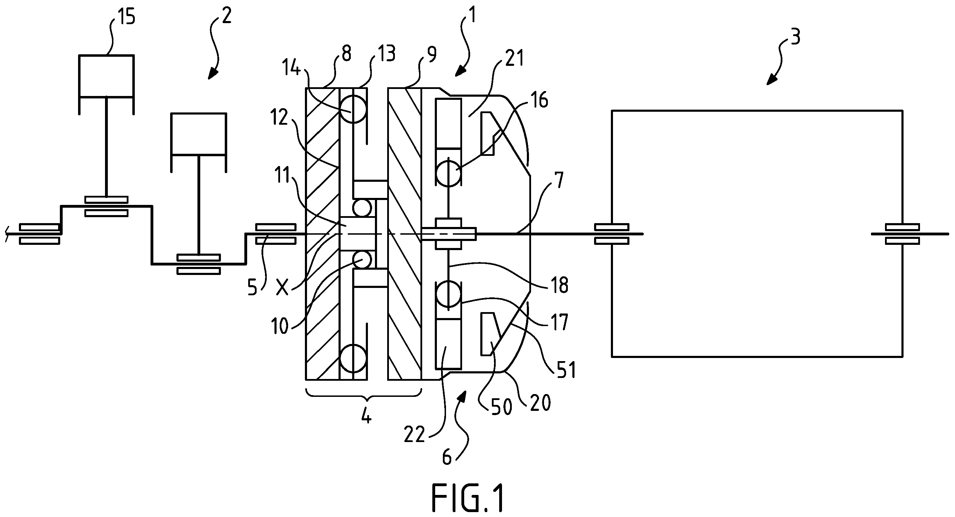

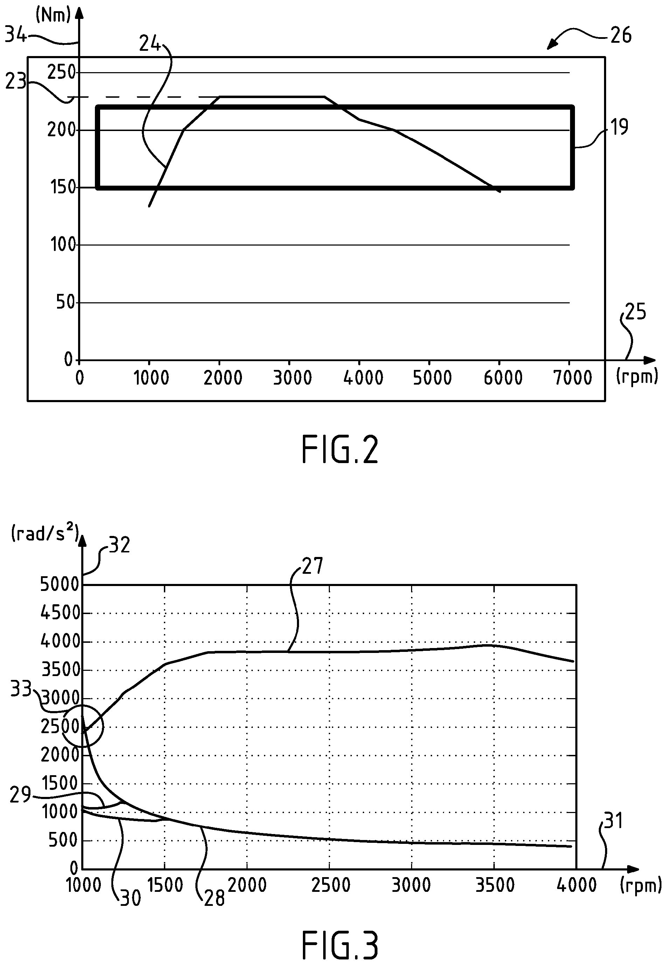

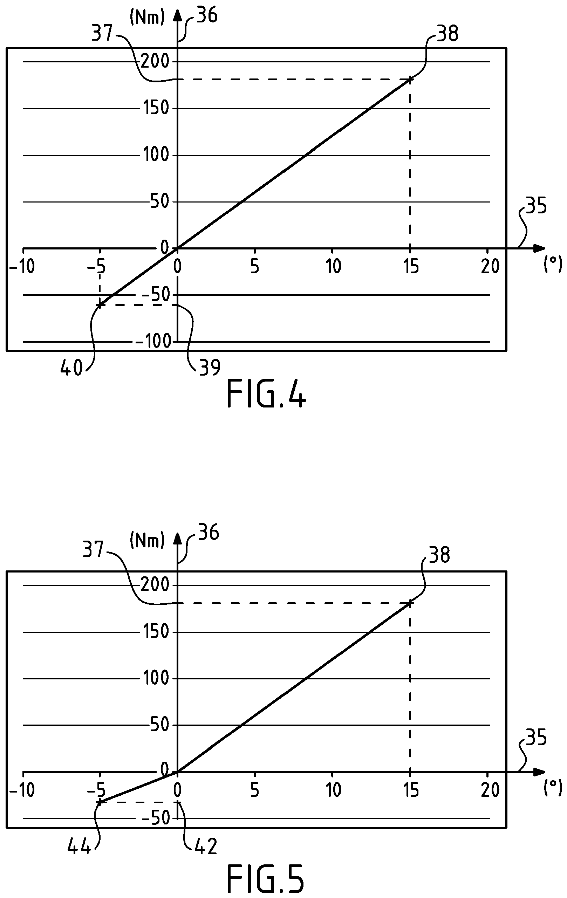

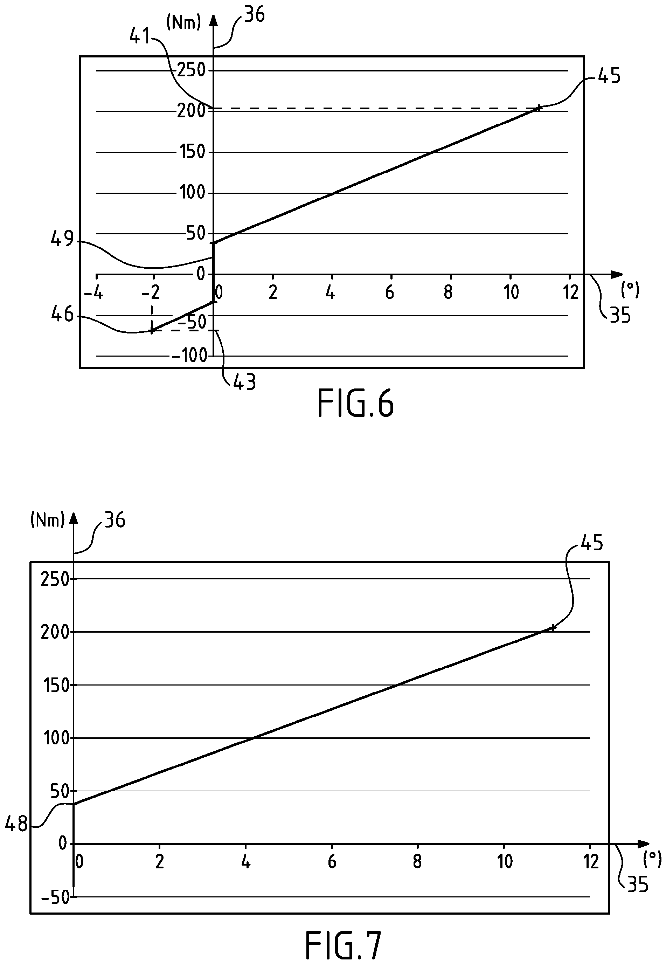

Sur ces figures :
- **La** **figure 1** est une vue schématique d'un ensemble de transmission disposé entre un moteur thermique et une boîte de vitesses.
- **La** **figure 2** est un graphique illustrant la courbe du couple disponible apte à être délivré par un moteur en fonction de son régime.
- **La** **figure 3** est un graphique illustrant l'accélération angulaire en fonction du régime du moteur.
- **La** **figure 4** est un graphique illustrant, dans un mode de réalisation de l'invention, la caractéristique d'un amortisseur de torsion d'un disque de friction.
- **La** **figure 5** est un graphique illustrant, dans un autre mode de réalisation de l'invention, la caractéristique d'un amortisseur de torsion d'un disque de friction.
- **La** **figure 6** est un graphique illustrant, dans un autre mode de réalisation de l'invention, la caractéristique d'un amortisseur de torsion d'un disque de friction.
- **La** **figure 7** est un graphique illustrant, dans un autre mode de réalisation de l'invention, la caractéristique d'un amortisseur de torsion d'un disque de friction.

### Description détaillée de modes de réalisation

Dans la description, on utilisera, les termes "externe" et "interne" ainsi que les orientations "axiale" et "radiale" pour désigner, selon les définitions données dans la description, des éléments de l'ensemble de transmission. Par convention, l'orientation "radiale" est dirigée orthogonalement à l'axe X de rotation de l'ensemble de transmission déterminant l'orientation "axiale" et, de l'intérieur vers l'extérieur en s'éloignant dudit axe X, l'orientation "circonférentielle" est dirigée orthogonalement à l'axe X de rotation de l'ensemble de transmission et orthogonalement à la direction radiale. Les termes "externe" et "interne" sont utilisés pour définir la position relative d'un élément par rapport à un autre, par référence à l'axe X, un élément proche de l'axe est ainsi qualifié d'interne par opposition à un élément externe situé radialement en périphérie. Par ailleurs, les termes "arrière" AR et "avant" AV sont utilisés pour définir la position relative d'un élément par rapport à un autre selon la direction axiale, un élément destiné à être placé proche du moteur thermique étant désigné par arrière et un élément destiné à être placé proche de la boîte de vitesses étant désigné par avant.

En se reportant à la figure 1, on voit un ensemble de transmission 1 disposé entre un moteur 2 à pistons 15 et une boîte de vitesses 3. L'ensemble de transmission 1 comporte un volant moteur 4 fixé au vilebrequin 5 du moteur 2, et un dispositif d'embrayage 6 permettant d'accoupler ou de désaccoupler en rotation le vilebrequin à un arbre d'entrée 7 de la boîte de vitesses.

Le volant moteur 4 est un double volant amortisseur. Le double volant amortisseur comprend un volant d'inertie primaire 8 fixé au vilebrequin 5 du moteur 2 et un volant d'inertie secondaire 9 qui est centré et guidé sur le volant primaire 8 au moyen d'un palier 10, ici un palier à roulement. Les volants d'inertie primaire 8 et secondaire 9 sont mobiles autour de l'axe de rotation X et sont, en outre, mobiles en rotation l'un par rapport à l'autre, autour dudit axe X.

Le volant primaire 8 comporte un moyeu central 11, radialement interne, portant le palier 10, une portion annulaire 12 s'étendant radialement et une portion cylindrique 13 s'étendant axialement, vers l'avant, depuis la périphérie externe de la portion annulaire 12.

Le double volant amortisseur comporte, en outre, des moyens d'amortissement 14 à organes élastiques permettant de transmettre un couple et d'amortir les acyclismes de rotation entre les volants d'inertie primaire 8 et secondaire 9 afin de réduire les vibrations provenant du moteur thermique.

Selon un mode de réalisation, les moyens d'amortissement 14 peuvent être constitués par des ressorts hélicoïdaux, tels que décrits dans le document WO2010079273, par des ressorts à lame, tels que décrits dans le document FR3008152 ou tout autre moyen équivalent connu de l'homme du métier.

Le dispositif d'embrayage 6 comporte un couvercle 20, fixé sur la périphérie externe du volant secondaire 9, un plateau de pression 50 et un diaphragme 51. Le volant secondaire 9 est destiné à former le plateau de réaction du dispositif d'embrayage 2. Le dispositif d'embrayage 6 comporte également un disque de friction 21 équipé de garnitures de friction 22.

Le disque de friction 21 est également équipé d'un amortisseur de torsion. L'amortisseur de torsion comprend un élément d'entrée 17 solidaire en rotation des garnitures de friction et un élément de sortie 18. L'élément de sortie 18 est solidaire en rotation d'un moyeu destiné à coopérer avec un arbre d'entrée de la boîte de vitesses et présentant des cannelures destinées à coopérer avec des cannelures dudit arbre d'entrée. L'amortisseur de torsion comporte également des moyens élastiques d'amortissement 16 qui permettent de transmettre un couple et d'amortir les acyclismes de rotation entre l'élément d'entrée 17 et l'élément de sortie 18. Les moyens élastiques d'amortissement 16 peuvent comprendre des ressorts hélicoïdaux ou des ressorts à lame ou tout autre moyen équivalent connu de l'homme du métier.

Dans un mode de réalisation, l'élément d'entrée comporte deux rondelles de guidage solidaires en rotation l'une de l'autre, l'élément de sortie comporte un voile disposé axialement entre les deux rondelles de guidage et les moyens élastiques d'amortissement sont des ressorts hélicoïdaux. Les ressorts hélicoïdaux sont disposés circonférentiellement dans des fenêtres ménagées dans les rondelles de guidage et dans le voile. Les extrémités des fenêtres forment des sièges d'appui destinés à l'appui des extrémités des ressorts hélicoïdaux de telle sorte que les ressorts hélicoïdaux s'opposent à la rotation relative des rondelles de guidage par rapport au voile. Selon un mode de réalisation alternatif, la structure est inversée et l'élément de sortie comporte deux rondelles de guidages solidaires en rotation l'une de l'autre tandis que l'élément d'entrée comporte un voile disposé axialement entre les deux rondelles de guidage.

Lorsqu'un couple entraînant est transmis du moteur à combustion vers la boîte de vitesses, c'est-à-dire qu'un couple est transmis du moteur vers les roues, les volants primaire 8 et secondaire 9, d'une part, et l'élément d'entrée 17 et l'élément de sortie 18 de l'amortisseur de torsion, d'autre part, subissent une rotation relative l'un par rapport à l'autre selon un premier sens. Ce sens de rotation est appelé sens direct. Lorsqu'un couple résistant est transmis de la boîte de vitesses vers le moteur, c'est-à-dire des roues vers le moteur, les volants primaire 8 et secondaire 9, d'une part, et l'élément d'entrée 17 et l'élément de sortie 18 de l'amortisseur de torsion, d'autre part, subissent une rotation relative l'un par rapport à l'autre selon un second sens. Ce sens de rotation est appelé sens retro.

Dans tous les cas, lorsqu'un couple est transmis, les moyens d'amortissement 14 exercent entre le volant primaire 8 et le volant secondaire 9 une force de rappel qui tend à les ramener vers leur position angulaire relative de repos et les moyens d'amortissement 16 exercent entre l'élément d'entrée 17 et l'élément de sortie 18 une force de rappel qui tend à les ramener vers leur position angulaire relative de repos. Autrement dit, lorsqu'aucun couple n'est transmis, le système est à l'équilibre, et les volants primaire 8 et secondaire 9, d'une part, et les éléments d'entrée 17 et de sortie 18, d'autre part, se situent dans leur position angulaire de repos.

Les moyens élastiques d'amortissement 14 du double volant amortisseur amortissent les vibrations jusqu'à ce que le couple transmis atteigne un seuil, appelé aussi couple d'arrêt (premier couple d'arrêt direct ou rétro). Les moyens élastiques d'amortissement 16 du disque de friction 21 amortissent les vibrations jusqu'à ce que le couple transmis atteigne un seuil, appelé aussi couple d'arrêt (second couple d'arrêt direct ou rétro).

Selon un mode de réalisation, la rotation relative du volant primaire 8 par rapport au volant secondaire 9 et la rotation relative de l'élément d'entrée 17 par rapport à l'élément de sortie 18 sont chacune limitées dans chacun des sens direct et rétro. Leur position relative de fin de course est appelée position de débattement maximum direct quand la rotation est dans le sens direct et position de débattement maximum retro quand la rotation est dans le sens retro.

La limitation de la rotation relative entre le volant primaire 8 et le volant secondaire 9 ou entre l'élément d'entrée 17 et l'élément de sortie 18 peut être réalisée de plusieurs façons. Dans un mode de réalisation, la rotation relative est limitée car les moyens d'amortissement atteignent leur position de compression maximale. C'est le cas par exemple pour des ressorts hélicoïdaux, lorsque les spires des ressorts sont jointives ; c'est-à-dire en butée les unes contre les autres. Dans un autre mode de réalisation préféré, les ressorts sont protégés par des moyens de butée agissant entre le volant primaire 8 et le volant secondaire 9 ou entre l'élément d'entrée 17 et l'élément de sortie 18, ces moyens de butée permettant de limiter la rotation relative entre les volants primaire 8 et secondaire 9 ou entre les éléments d'entrée 17 et de sortie 18 avant que les moyens d'amortissement 14, 16 n'atteignent leur position de compression maximale, ce qui permet de les protéger.

Le volant primaire 8 et la volant secondaire 9 atteignent leur position de débattement maximum direct pour des valeurs de couple entraînant supérieures ou égales à un seuil, nommé premier couple d'arrêt direct, et atteignent leur position de débattement maximum rétro pour des valeurs de couple résistant supérieures ou égales à un seuil, nommé premier couple d'arrêt rétro. De la même manière, l'élément d'entrée 17 et l'élément de sortie 18 de l'amortisseur de torsion atteignent leur position de débattement maximum direct pour des valeurs de couple entraînant supérieures ou égales à un seuil, nommé second couple d'arrêt direct, et atteignent leur position de débattement maximum rétro pour des valeurs de couple résistant supérieures ou égales à un seuil, nommé second couple d'arrêt rétro.

Selon d'autres modes de réalisation, le double volant amortisseur et/ou le disque de friction peuvent être équipés d'un limiteur de couple, tel que décrit par exemple dans le document FR2738606. Dans ce cas, les couples d'arrêt direct et rétro ne correspondent pas à une position de débattement maximum entre les volants 8, 9 du double volant amortisseur ou entre les éléments d'entrée 17 et de sortie 18 de l'amortisseur de torsion mais correspondent à des seuils de couple au-delà desquels le limiteur de couple se déclenche.

Le couple disponible susceptible d'être délivré par un moteur donné varie en fonction du régime moteur, c'est-à-dire du nombre de rotations par minute du vilebrequin du moteur. En référence à la figure 2, un graphique 26 représente la courbe du couple disponible susceptible d'être délivré par le moteur 24 (en Nm selon l'axe 34), en fonction du nombre de rotations par minute du vilebrequin du moteur (rpm selon l'axe 25). On utilisera par la suite le terme de « couple maximal du moteur » pour désigner la valeur extrême du couple disponible susceptible d'être délivré par le moteur, tout régime confondu. A titre d'exemple, sur la figure 2, le couple maximal 23 du moteur est égal à 230 Nm et est atteint pour un régime moteur compris entre 2000 et 3500 tours par minute.

Les moyens d'amortissement 14 du double volant amortisseur sont dimensionnés de manière à ce que les premiers couples d'arrêt direct et rétro soient supérieurs au couple maximal du moteur 23 de sorte à permettre un amortissement des vibrations quel que soit le régime moteur. Afin de prévoir une marge de sécurité, les moyens d'amortissement 14 sont de préférence dimensionnés de telle sorte que les premiers couples d'arrêt direct et rétro soient supérieurs à 1,2 fois la valeur du couple maximal du moteur 23, par exemple compris entre 1,2 et 1,5, notamment sensiblement compris entre 1,2 et 1,3 fois la valeur du couple maximal du moteur 23.

Les moyens d'amortissement 16 de l'amortisseur de torsion du disque de friction 21 sont quant à eux dimensionnés de manière différente, tel qu'il sera décrit ci-dessous.

On observe sur la figure 2, une zone 19 illustrant des valeurs du second couple d'arrêt direct susceptibles d'être prises par l'amortisseur de torsion du disque de friction 21 pour la motorisation visée. On observe ainsi que les moyens d'amortissement 16 de l'amortisseur de torsion sont dimensionnés de sorte à ce que le second couple d'arrêt direct soit inférieur au couple maximal 23. Aussi, sur la figure 2, le second couple d'arrêt direct des moyens d'amortissement 16 prend une valeur comprise entre 150 et 220 Nm, soit entre 65% à 97% du couple maximal moteur. Les moyens d'amortissement 16 ne sont donc ici pas aptes à amortir les vibrations quels que soient le régime du moteur et le couple qu'il délivre. Le filtrage n'est donc assuré que par le double volant amortisseur lorsque le moteur délivre son couple maximal. Toutefois, en contrepartie, les moyens d'amortissement 16 peuvent être réalisés au moyen de ressorts moins encombrants et moins lourds, ce qui permet notamment de diminuer l'encombrement axial de l'amortisseur de torsion du disque de friction et par conséquent du disque de friction et de réduire son inertie.

Les moyens d'amortissement 16 équipant le disque de friction 21 sont donc sous-dimensionnés par rapport à ceux du double volant amortisseur. Les seconds couples d'arrêt direct et rétro sont donc respectivement inférieurs aux premiers couples d'arrêt direct et rétro.

Toutefois, afin de permettre une filtration des vibrations efficaces, notamment dans la zone à bas régime pour laquelle le moteur ne délivre pas son couple maximal, la valeur du second couple d'arrêt doit toutefois être suffisamment élevée. Ainsi, le second couple d'arrêt direct est supérieur à 26 % de la valeur du premier couple d'arrêt et dans un mode de réalisation préférentiel, le second couple d'arrêt direct est supérieur à 33% de la valeur du premier couple d'arrêt, par exemple supérieur à 40%.

Le second couple d'arrêt rétro est quant à lui nettement inférieur au premier couple d'arrêt rétro et par exemple compris entre 0 et 60 Nm.

La figure 3 est une courbe illustrant l'accélération angulaire représentative des acyclismes de rotation d'un élément de la chaîne de transmission, en fonction du régime moteur pour un moteur délivrant intégralement le couple disponible illustrée sur la figure 2.

L'accélération angulaire est projetée sur l'axe des ordonnées 32 et exprimée en rad/s². Le régime moteur est représenté sur l'axe des abscisses 31 et exprimé en rotation par minute (tours/mn).

La courbe 27 représente l'accélération angulaire à l'entrée de l'ensemble de transmission, par exemple vue au niveau du volant primaire d'un double volant amortisseur.

Les autres courbes 28, 29, 30 représentent l'accélération angulaire à la sortie de l'ensemble de transmission, soit au niveau de l'arbre d'entrée d'une boîte de vitesses pour différents ensembles de transmission.

Les ensembles de transmission correspondant à ces courbes 28, 29, 30 sont respectivement équipés :
- d'un double volant amortisseur et d'un disque de friction ne comprenant pas d'amortisseur de torsion (courbe 28) ;
- d'un double volant amortisseur et d'un disque de friction équipé d'un amortisseur dont les moyens d'amortissement16 sont dimensionnés de sorte à ce que le second couple d'arrêt direct soit égal à 150 Nm (courbe 29) ;
- d'un double volant amortisseur et d'un disque de friction équipé d'un amortisseur dont les moyens d'amortissement de friction 16 sont dimensionnés de sorte à ce que le second couple d'arrêt direct soit égal à 200 Nm (courbe 30).

On constate ainsi qu'un ensemble de transmission tel que décrit ci-dessus associant les moyens d'amortissement 14 du double volant amortisseur à des moyens d'amortissement 16 du disque de friction 21 permet d'obtenir des performances de filtration des vibrations bien supérieures à celles d'un double volant amortisseur seul.

On constate, en effet, que la courbe 27 et la courbe 28 se croisent à bas régime, autour de 1000 tours/minute, comme représenté dans la zone 33, en l'absence de moyens d'amortissement 16, ce qui conduit à une amplification des acyclismes. En revanche, ce n'est pas le cas pour un ensemble de transmission dont le disque de friction est équipé de moyens d'amortissement 16, comme représenté par les courbes 29 et 30. Ainsi, l'utilisation d'un disque de friction équipé de moyens d'amortissement 16 conduit à une augmentation des performances de filtration, notamment dans les plages de fonctionnement à bas régimes pour lesquelles l'efficacité du double volant amortisseur est moindre.

On remarque aussi qu'entre la courbe 30 et la courbe 29, avec une diminution de 25% du couple d'arrêt des moyens élastiques d'amortissement du disque de friction apte à générer un gain en compacité axiale, les acyclismes importants observés à bas régime dans le cas d'un DVA seul (zone 33) restent correctement amortis.

En relation avec les figures 4 à 7, on décrira désormais quatre courbes caractéristiques de quatre amortisseurs de torsion susceptibles d'équiper le disque de friction 21. Ces amortisseurs de torsion sont équipés d'un élément d'entrée 17 et l'élément de sortie 18, ainsi que de ressorts ayant fonction de moyens d'amortissement 16 pour transmettre un couple tels que définis précédemment.

Les courbes caractéristiques représentent les valeurs de couple transmis par l'amortisseur de torsion en fonction de l'angle de débattement entre l'élément d'entrée 17 et l'élément de sortie 18.

L'angle de débattement correspond à une rotation relative des éléments d'entrée 17 et de sortie 18 autour de l'axe de rotation X. L'axe vertical 36 indique les valeurs de couple transmis (en Nm), et l'axe horizontal 35 indique les valeurs d'angle de débattement (en °). L'angle de débattement nul correspond à la position relative de repos de l'élément d'entrée 17 et de l'élément de sortie 18. Le débattement relatif entre les éléments d'entrée 17 et de sortie 18, dans le sens direct, est représenté à droite de l'axe des ordonnées alors que le débattement, dans le sens retro est représenté à gauche de l'axe des ordonnées.

Le point de fonctionnement 38, illustré sur la figure 4, correspond au second couple d'arrêt direct 37. Le second couple d'arrêt direct est ici atteint pour un angle de débattement égal à 15°. Le point de fonctionnement 40 correspond au second couple d'arrêt retro 39, qui est atteint pour un angle de débattement égal à - 5°. La raideur des moyens d'amortissement est constante sur toute la plage d'angles de débattement possibles, soit de -5°à 15 °.

La valeur absolue du second couple d'arrêt retro 39 est inférieure à celle du second couple d'arrêt direct 37. Ainsi, la caractéristique des ressorts peut être dissymétrique.

La figure 5 est analogue à la figure 4 pour le sens direct. Elle illustre un autre mode de réalisation de l'invention dans lequel la caractéristique des ressorts présente une rupture de pente à la position de repos du système. Le point de fonctionnement 44 correspond au second couple d'arrêt retro 42 inférieur au second couple d'arrêt retro 39, pour l'angle de débattement max -5°. Par conséquent, la raideur des ressorts est moindre pour les angles de débattement négatif que pour les angles positifs. La réduction de la raideur en rétro permet d'améliorer la capacité de filtrage du système pour la transmission de couple résistant.

La figure 6 est un graphique illustrant, dans un autre mode de réalisation de l'invention, les valeurs du couple transmis en fonction de l'angle de débattement entre l'élément d'entrée 17 et l'élément de sortie 18 du disque de friction 21. En l'absence de débattement, c'est-à-dire dans la position de repos, les ressorts sont pré-comprimés. En effet, pour le mode de réalisation de la figure 6, il faut vaincre la force de réaction des ressorts qui est due à la compression des ressorts pour que la transmission du couple entraîne une rotation relative de l'élément d'entrée 17 par rapport à l'élément de sortie 18, et qu'ainsi le système quitte sa position relative de repos.

Le point de fonctionnement 45, illustré sur la figure 6, correspond au second couple d'arrêt direct 41. Le second couple d'arrêt direct est atteint pour un angle de débattement maximum égal à 15°. Le point de fonctionnement 46 correspond au second couple d'arrêt retro 43 qui est atteint pour un angle de débattement de -5°.

La raideur des ressorts est constante sur toute la plage d'angles de débattement possibles, soit de -5° à 15° sauf pour la position de repos pour laquelle la courbe présente un décrochement 49. Ce décrochement de second couple correspond à la pré-compression des ressorts.

Un avantage de ce mode de réalisation est de diminuer la raideur des ressorts et ainsi d'augmenter l'efficacité de la filtration, à second couple d'arrêt et angle de débattement égal.

La figure 7 est un graphique illustrant, dans un autre mode de réalisation de l'invention, les valeurs de second couple transmis en fonction de l'angle de débattement entre l'élément d'entrée 17 et l'élément de sortie 18 du disque de friction 21. Les ressorts sont également comprimés, tel que représenté par la valeur de second couple 48 non nulle en l'absence de débattement, c'est-à-dire dans la position de repos. Toutefois, dans ce mode de réalisation, les moyens d'amortissement n'agissent que dans le sens direct.

La diminution de la raideur des moyens d'amortissement de friction 16 permet d'augmenter les performances de filtration. Pour une plage d'angle de débattement donnée, faire diminuer la valeur du couple d'arrêt permet notamment de faire diminuer la raideur des moyens d'amortissement 16 et permet donc d'augmenter l'efficacité de filtration pour autant que le couple délivré par le moteur n'est pas supérieur au couple d'arrêt.

Dans un mode de réalisation, le disque de friction est équipé de moyens de frottement (par exemple entre 5 N.m et 50 N.m), mis en oeuvre de façon connue, de façon à éviter un phénomène de résonnance dans un régime supérieur à la plage de filtrage de l'amortisseur du disque de friction (par exemple entre 2000 et 2500 tours/min).

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention. Notamment, les moyens d'amortissements décrits ci-dessus sont des ressorts hélicoïdaux.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

## Revendications

1. Ensemble de transmission pour véhicule automobile, destiné à assurer l'accouplement entre un arbre menant (5) et un arbre mené (7), ledit ensemble comportant :
- un double volant amortisseur (4) comportant :
• un volant d'inertie primaire (8), destiné à être fixé à l'arbre menant (5), et un volant d'inertie secondaire (9) ; les volants d'inertie primaire et secondaire étant montés mobiles en rotation l'un par rapport à l'autre autour d'un axe de rotation X; et
• des premiers moyens élastiques d'amortissement (14) accouplant élastiquement le volant d'inertie primaire (8) et le volant d'inertie secondaire (9) et étant aptes à amortir les vibrations :
- pour un couple transmis selon un sens direct, du volant d'inertie primaire (8) vers le volant d'inertie secondaire (9) prenant une valeur inférieure à un premier couple d'arrêt direct ; et
- pour un couple transmis selon un sens rétro du volant d'inertie secondaire (9) vers le volant d'inertie primaire (8) prenant une valeur inférieure à un premier couple d'arrêt rétro ;
et
- un dispositif d'embrayage (6) comportant :
• un disque de friction (21) comportant des garnitures de friction ; et
• un mécanisme d'embrayage fixé sur le volant d'inertie secondaire (9) du double volant amortisseur (4), ledit mécanisme d'embrayage étant apte à prendre une position embrayée dans laquelle il presse les garnitures de friction contre le volant d'inertie secondaire (9) du double volant amortisseur (4) et une position débrayée ;
le disque de friction (21) comportant en outre un amortisseur de torsion comportant :
• un élément d'entrée (17) solidaire en rotation des garnitures de friction et un élément de sortie (18) destiné à être accouplé en rotation à l'arbre mené (7), les éléments d'entrée et de sortie étant montés mobiles en rotation l'un par rapport à l'autre autour de l'axe de rotation X;
• des seconds moyens élastiques d'amortissement (16) accouplant élastiquement l'élément d'entrée (17) et l'élément de sortie (18) et étant aptes à amortir les vibrations :
- pour un couple (34, 36) transmis selon un sens direct, de l'élément d'entrée (17) vers l'élément de sortie (18) prenant une valeur inférieure à un second couple d'arrêt direct (37, 41, 19), et
- pour un couple (34, 36) transmis selon un sens rétro de l'élément de sortie (18) vers l'élément d'entrée (17) prenant une valeur inférieure à un second couple d'arrêt rétro (39, 42, 43) ;
ledit ensemble étant **caractérisé en ce que** le second couple d'arrêt direct (19, 38) est compris entre 26 % et 84 % du premier couple d'arrêt direct.

2. Ensemble de transmission selon la revendication précédente, dans lequel le second couple d'arrêt direct (19, 38) est supérieur à 33 % du premier couple d'arrêt direct, de préférence supérieur à 40 % du premier couple d'arrêt direct.

3. Ensemble de transmission selon la revendication 1 ou 2, dans lequel le second couple d'arrêt direct (19, 38) est inférieur à 75 %du premier couple d'arrêt direct, de préférence inférieur à 66 % du premier couple d'arrêt direct.

4. Ensemble de transmission selon l'une quelconque des revendications 1 à 3, dans lequel le second couple d'arrêt rétro est inférieur au premier couple d'arrêt rétro.

5. Ensemble de transmission selon la revendication 4, dans lequel le second couple d'arrêt rétro est compris entre 0 et 60 Nm.

6. Ensemble de transmission selon la revendication 4, dans lequel le second couple d'arrêt rétro est nul.

7. Ensemble de transmission selon l'une des revendications 1 à 6, dans lequel les seconds moyens élastiques d'amortissement (16) présentent une raideur constante sur toute la plage de rotation relative des éléments d'entrée et de sortie.

8. Ensemble de transmission selon l'une des revendications 1 à 6, dans lequel les seconds moyens élastiques d'amortissement (16) présentent une première raideur (44) pour une transmission de couple selon le sens direct et une seconde raideur (38) différente de la première raideur pour une transmission de couple selon le sens rétro.

9. Ensemble de transmission selon l'une des revendications 1 à 8, dans lequel les seconds moyens d'amortissement sont pré-comprimés (49) dans une position relative de repos des éléments d'entrée et de sortie.

10. Ensemble de transmission selon l'une quelconque des revendications 1 à 9, dans lequel le second couple d'arrêt direct (19, 38) est inférieur à un couple maximal susceptible d'être délivré par un moteur (2) à combustion entraînant l'arbre menant (5).

11. Ensemble de transmission selon l'une quelconque des revendications 1 à 9, dans lequel le premier couple d'arrêt direct est supérieur à 120 % d'un couple maximal susceptible d'être délivré par un moteur (2) à combustion entraînant l'arbre menant (5), de préférence compris entre 120 et 150 % et par exemple entre 120 et 130 % dudit couple maximal.

12. Ensemble de transmission selon l'une quelconque des revendications 1 à 11, dans lequel les volants d'inertie primaire et secondaire sont mobiles en rotation l'un par rapport à l'autre autour de l'axe de rotation X entre une première et une seconde positions de débattement maximum correspondant respectivement à une rotation relative maximale des volants d'inertie primaire et secondaire selon deux sens de rotation relative opposés, les premiers couples d'arrêt direct et rétro correspondant respectivement à des seuils de couple pour lesquels les volants d'inertie primaire et secondaire atteignent leur première et leur seconde positions de débattement maximum, et dans lequel les éléments d'entrée et de sortie étant montés mobiles en rotation l'un par rapport à l'autre autour de l'axe de rotation X entre une première (40, 44, 46) et une seconde (38, 45) positions de débattement maximum correspondant respectivement à une rotation relative maximale des éléments d'entrée et de sortie selon deux sens de rotation opposés; les seconds couples d'arrêt direct et rétro correspondant respectivement à des seuils de couple (34, 36) pour lesquels les éléments d'entrée et de sortie atteignent leur première (40, 44, 46) et leur seconde (38, 45) positions de débattement maximum.

13. Ensemble de transmission selon l'une quelconque des revendications 1 à 12, dans lequel les seconds moyens élastiques d'amortissement sont agencés de telle sorte que pour un couple transmis prenant une valeur égale au second couple d'arrêt direct lesdits seconds moyens élastiques d'amortissement emmagasinent une énergie supérieure à 80 % de l'énergie maximum qu'ils sont aptes à emmagasiner.

14. Véhicule automobile comprenant un ensemble de transmission selon l'une quelconque des revendications 1 à 13 et un moteur (2) à combustion apte à délivrer un couple moteur (24) maximum, ledit moteur (2) à combustion comprenant un vilebrequin (5) constituant l'arbre menant (5), le volant d'inertie primaire (8) du double volant amortisseur (4) étant fixé sur ledit vilebrequin (5).

## Patentansprüche

1. Getriebeanordnung für ein Kraftfahrzeug zur Sicherstellung der Kopplung zwischen einer Antriebswelle (5) und einer angetriebenen Welle (7), wobei die Anordnung Folgendes umfasst:
- ein Zweimassenschwungrad (4), das Folgendes umfasst:
▪ ein primäres Trägheitsschwungrad (8) zur Fixierung an der Antriebswelle (5) und ein sekundäres Trägheitsschwungrad (9); wobei das primäre und das sekundäre Trägheitsschwungrad drehbeweglich zueinander um eine Drehachse X befestigt sind; und
▪ erste elastische Dämpfungsmittel (14), die das primäre Trägheitsschwungrad (8) und das sekundäre Trägheitsschwungrad (9) koppeln und zur Dämpfung von Schwingungen in der Lage sind:
- für ein Drehmoment, das in einer Vorwärtsrichtung von dem primären Trägheitsschwungrad (8) zu dem sekundären Trägheitsschwungrad (9) übertragen wird und weniger als ein erstes Vorwärtshaltemoment beträgt; und
- für ein Drehmoment, das in einer Rückwärtsrichtung von dem sekundären Trägheitsschwungrad (9) zu dem primären Trägheitsschwungrad (8) übertragen wird und weniger als ein erstes Rückwärtshaltemoment beträgt;
und
- eine Kupplungsvorrichtung (6), die Folgendes umfasst:
▪ eine Reibscheibe (21), die Reibbeläge umfasst; und
▪ einen Kupplungsmechanismus, der an dem sekundären Trägheitsschwungrad (9) des Zweimassenschwungrads (4) fixiert ist, wobei der Kupplungsmechanismus eine eingerückte Stellung, in der er die Reibbeläge gegen das sekundäre Trägheitsschwungrad (9) des Zweimassenschwungrads (4) drückt, und eine ausgerückte Stellung einnehmen kann;
wobei die Reibscheibe (21) des Weiteren einen Torsionsdämpfer umfasst, der Folgendes umfasst:
▪ ein Eingangselement (17), das mit den Reibbelägen drehfest ist, und ein Ausgangselement (18) zum Drehkoppeln mit der angetriebenen Welle (7), wobei das Eingangs- und das Ausgangselement drehbeweglich zueinander um die Drehachse X befestigt sind;
▪ zweite elastische Dämpfungsmittel (16), die das Eingangselement (17) und das Ausgangselement (18) elastisch koppeln und zur Dämpfung von Schwingungen in der Lage sind:
- für ein Drehmoment (34, 36), das in einer Vorwärtsrichtung von dem Eingangselement (17) zu dem Ausgangselement (18) übertragen wird und weniger als ein zweites Vorwärtshaltemoment (37, 41, 19) beträgt; und
- für ein Drehmoment (34, 36), das in einer Rückwärtsrichtung von dem Ausgangselement (18) zu dem Eingangselement (17) übertragen wird und weniger als ein zweites Rückwärtshaltemoment (39, 42, 43) beträgt;
wobei die Anordnung **dadurch gekennzeichnet ist, dass** das zweite Vorwärtshaltemoment (19, 38) zwischen 26 % und 84 % des ersten Vorwärtshaltemoments beträgt.

2. Getriebeanordnung nach dem vorhergehenden Anspruch, wobei das zweite Vorwärtshaltemoment (19, 38) mehr als 33 % des ersten Vorwärtshaltemoments, vorzugsweise mehr als 40 % des ersten Vorwärtshaltemoments, beträgt.

3. Getriebeanordnung nach Anspruch 1 oder 2, wobei das zweite Vorwärtshaltemoment (19, 38) weniger als 75 % des ersten Vorwärtshaltemoments, vorzugsweise weniger als 66 % des ersten Vorwärtshaltemoments, beträgt.

4. Getriebeanordnung nach einem der Ansprüche 1-3, wobei das zweite Rückwärtshaltemoment weniger als das erste Rückwärtshaltemoment beträgt.

5. Getriebeanordnung nach Anspruch 4, wobei das zweite Rückwärtshaltemoment zwischen 0 und 60 Nm beträgt.

6. Getriebeanordnung nach Anspruch 4, wobei das zweite Rückwärtshaltemoment null beträgt.

7. Getriebeanordnung nach einem der Ansprüche 1-6, wobei die zweiten elastischen Dämpfungsmittel (16) eine konstante Steifigkeit über den gesamten Bereich der jeweiligen Drehung des Eingangs- und des Ausgangselements hinweg aufweisen.

8. Getriebeanordnung nach einem der Ansprüche 1-6, wobei die zweiten elastischen Dämpfungsmittel (16) eine erste Steifigkeit (44) für eine Drehmomentübertragung in Vorwärtsrichtung und eine zweite Steifigkeit (38), die sich von der ersten Steifigkeit unterscheidet, für eine Drehmomentübertragung in Rückwärtsrichtung aufweisen.

9. Getriebeanordnung nach einem der Ansprüche 1-8, wobei die zweiten Dämpfungsmittel in eine jeweilige Ruhestellung des Eingangs- und des Ausgangselements vorkomprimiert (49) sind.

10. Getriebeanordnung nach einem der Ansprüche 1-9, wobei das zweite Vorwärtshaltemoment (19, 38) weniger als ein maximales Drehmoment, das von einem Verbrennungsmotor (2), der die Antriebswelle (5) antreibt, zugeführt werden kann, beträgt.

11. Getriebeanordnung nach einem der Ansprüche 1-9, wobei das erste Vorwärtshaltemoment mehr als 120 % eines maximalen Drehmoments, das von einem Verbrennungsmotor (2), der die Antriebswelle (5) antreibt, zugeführt werden kann, vorzugsweise zwischen 120 und 150 % und beispielsweise zwischen 120 und 130 % des maximalen Drehmoments, beträgt.

12. Getriebeanordnung nach einem der Ansprüche 1-11, wobei das primäre und das sekundäre Trägheitsschwungrad zwischen einer ersten und einer zweiten Maximalhubstellung, die einer jeweiligen Maximaldrehung des primären bzw. des sekundären Trägheitsschwungrads in zueinander entgegengesetzten Drehrichtungen entsprechen, um die Drehachse X drehbeweglich zueinander sind, wobei das erste Vorwärtshaltemoment und das erste Rückwärtshaltemoment jeweils Drehmomentschwellenwerten, bei denen das primäre und das sekundäre Trägheitsschwungrad ihrer erste und ihre zweite Maximalhubstellung erreichen, entsprechen, und wobei das Eingangs- und das Ausgangselement zwischen einer ersten (40, 44, 46) und einer zweiten (38, 45) Maximalhubstellung, die einer jeweiligen Maximaldrehung des Eingangs- und des Ausgangselements in zwei entgegengesetzten Drehrichtungen entsprechen, um die Drehachse X drehbeweglich zueinander befestigt sind; wobei das zweite Vorwärtshaltemoment und das zweite Rückwärtshaltemoment jeweils Schwellenwerten für das Drehmoment (34, 36), bei denen das Eingangs- und das Ausgangselement ihre erste (40, 44, 46) und ihre zweite (38, 45) Maximalhubstellung erreichen, entsprechen.

13. Getriebeanordnung nach einem der Ansprüche 1-12, wobei die zweiten elastischen Dämpfungselemente derart angeordnet sind, dass die zweiten elastischen Dämpfungselemente für ein übertragenes Drehmoment, das dem zweiten Vorwärtshaltemoment entspricht, eine Energie von mehr als 80 % der maximalen Energie, die sie aufnehmen können, aufnehmen.

14. Kraftfahrzeug, das eine Getriebeanordnung nach einem der Ansprüche 1-13 und einen Verbrennungsmotor (2), der ein maximales Motordrehmoment (24) zuführen kann, umfasst, wobei der Verbrennungsmotor (2) eine Kurbelwelle (5), die die Antriebswelle (5) bildet, umfasst, wobei das primäre Trägheitsschwungrad (8) des Zweimassenschwungrads (4) an der Kurbelwelle (5) fixiert ist.

## Claims

1. Transmission assembly for a motor vehicle, designed to ensure the coupling between a driving shaft (5) and a driven shaft (7), said assembly comprising:
- a dual mass flywheel (4) comprising:
• a primary inertia flywheel (8), designed to be secured to the driving shaft (5), and a secondary inertia flywheel (9); the primary and secondary inertia flywheels being mounted movably in rotation with respect to one another about an axis of rotation X; and
• first resilient damping means (14) elastically coupling the primary inertia flywheel (8) and the secondary inertia flywheel (9) and being suitable for damping the vibrations:
- for a torque transmitted in a forward direction, from the primary inertia flywheel (8) to the secondary inertia flywheel (9) having a value less than a first forward standstill torque; and
- for a torque transmitted in a reverse direction from the secondary inertia flywheel (9) to the primary inertia flywheel (8) having a value less than a first reverse standstill torque;
and
- a clutch device (6) comprising:
• a friction disk (21) having friction linings; and
• a clutch mechanism secured to the secondary inertia flywheel (9) of the dual mass flywheel (4), said clutch mechanism being able to assume an engaged position in which it presses the friction linings against the secondary inertia flywheel (9) of the dual mass flywheel (4) and a disengaged position,
the friction disk (21) furthermore comprising a torsional shock absorber having:
• an input element (17) integrated in rotation with the friction linings and an output element (18) designed to be coupled in rotation with the driven shaft (7), the input and output elements being mounted movably in rotation with respect to one another about the axis of rotation X;
• second resilient damping means (16) elastically coupling the input element (17) and the output element (18) and being suitable for damping the vibrations:
- for a torque (34, 36) transmitted in a forward direction, from the input element (17) to the output element (18) having a value less than a second forward standstill torque (37, 41, 19), and
- for a torque (34, 36) transmitted in a reverse direction from the output element (18) to the input element (17) having a value less than a second reverse standstill torque (39, 42, 43);
said assembly being **characterized in that** the second forward standstill torque (19, 38) is between 26% and 84% of the first forward standstill torque.

2. Transmission assembly according to the preceding claim, in which the second forward standstill torque (19, 38) is more than 33% of the first forward standstill torque, preferably more than 40% of the first forward standstill torque.

3. Transmission assembly according to Claim 1 or 2, in which the second forward standstill torque (19, 38) is less than 75% of the first forward standstill torque, preferably less than 66% of the first forward standstill torque.

4. Transmission assembly according to any one of Claims 1 to 3, in which the second reverse standstill torque is less than the first reverse standstill torque.

5. Transmission assembly according to Claim 4, in which the second reverse standstill torque is between 0 and 60 Nm.

6. Transmission assembly according to Claim 4, in which the second reverse standstill torque is zero.

7. Transmission assembly according to one of Claims 1 to 6, in which the second resilient damping means (16) have a constant stiffness in the entire range of relative rotation of the input and output elements.

8. Transmission assembly according to one of Claims 1 to 6, in which the second resilient damping means (16) have a first stiffness (44) for a torque transmission in the forward direction and a second stiffness (38) different from the first stiffness for a torque transmission in the reverse direction.

9. Transmission assembly according to one of Claims 1 to 8, in which the second damping means are precompressed (49) in a relative position of rest of the input and output elements.

10. Transmission assembly according to any one of Claims 1 to 9, in which the second forward standstill torque (19, 38) is less than a maximum torque able to be delivered by a combustion engine (2) driving the driving shaft (5).

11. Transmission assembly according to any one of Claims 1 to 9, in which the first forward standstill torque is greater than 120% of a maximum torque able to be delivered by a combustion engine (2) driving the driving shaft (5), preferably between 120 and 150% and for example between 120 and 130% of said maximum torque.

12. Transmission assembly according to any one of Claims 1 to 11, in which the primary and secondary inertia flywheels are movable in rotation with respect to each other about the axis of rotation X between a first and a second position of maximum travel corresponding respectively to a relative maximum rotation of the primary and secondary inertia flywheels in two opposite relative directions of rotation, the first forward and reverse standstill torques corresponding respectively to torque thresholds for which the primary and secondary inertia flywheels reach their first and second positions of maximum travel, and in which the input and output elements are movable in rotation with respect to each other about the axis of rotation X between a first (40, 44, 46) and a second (38, 45) position of maximum travel corresponding respectively to a relative maximum rotation of the input and output elements in two opposite directions of rotation; the second forward and reverse standstill torques corresponding respectively to torque thresholds (34, 36) for which the input and output elements reach their first (40, 44, 46) and their second (38, 45) positions of maximum travel.

13. Transmission assembly according to any one of Claims 1 to 12, in which the second resilient damping means are arranged such that, for a torque transmitted having a value equal to the second forward standstill torque, said second resilient damping means store up an energy greater than 80% of the maximum energy which they are able to store up.

14. Motor vehicle comprising a transmission assembly according to any one of Claims 1 to 13, and a combustion engine (2) able to deliver a maximum engine torque (24), said combustion engine (2) comprising a crank shaft (5) constituting the driving shaft (5), the primary inertia flywheel (8) of the dual mass flywheel (4) being secured on said crank shaft (5).
